(19) Europäisches Patentamt

European Patent Office

Office européen des brevets

(11) **EP 1 235 057 A2**

(12) **EUROPÄISCHE PATENTANMELDUNG**

(43) Veröffentlichungstag:
28.08.2002 Patentblatt 2002/35

(51) Int Cl.⁷: **G01F 1/66**

(21) Anmeldenummer: 02000582.3

(22) Anmeldetag: **10.01.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **24.02.2001 DE 10109161**

(71) Anmelder: **Hydrometer GmbH**
**91522 Ansbach (DE)**

(72) Erfinder:
• **Sonneberg, Hans-Michael**
**90616 Neuhof (DE)**

• **Gaugler, Ulrich**
**91746 Weidenbach (DE)**
• **Dietz, Gerhard**
**91586 Lichtenau (DE)**
• **Klass, Walter**
**91522 Ansbach (DE)**

(74) Vertreter: **Stippl, Hubert, Dipl.-Ing.**
**Hafner & Stippl,**
**Patentanwälte,**
**Schleiermacherstrasse 25**
**90491 Nürnberg (DE)**

(54) **Ultraschalldurchflussmesser mit einem Freistrahl**

(57) Die Erfindung betrifft einen Durchflußmesser für flüssige oder gasförmige Medien mit einer zumindest teilweise durchströmten Meßkammer 2, mindestens einem Einlaß- 3 und mindestens einem Auslaßkanal 4 und mit mindestens einem Ultraschallwandler 5, 6 zur Erzeugung von Ultraschallsignalen, wobei in der Meßkammer 2 mindestens ein Mittel zur Erzeugung mindestens eines Strahls 9 des zu messenden Mediums vorgesehen ist und die Ultraschallsignale 7 den mindestens einen Strahl 9 zumindest teilweise durchsetzen.

Fig. 1

EP 1 235 057 A2

**Beschreibung**

Die Erfindung betrifft einen Durchflußmesser für flüssige oder gasförmige Medien mit den weiteren Merkmalen des Oberbegriffes des Patentanspruches 1.

Durchflußmesser für flüssige oder gasförmige Medien weisen eine zumindest teilweise durchströmte Meßkammer auf, in die mindestens ein Einlaßkanal mündet und von der mindestens ein Auslaßkanal wegführt. Die Messung des durchströmenden Mediums erfolgt mit mindestens einem Ultraschallwandler, der Ultraschallsignale erzeugt, die das strömende Medium in der Meßkammer mit und entgegen der Strömungsrichtung durchsetzen. Aus den gemessenen Laufzeiten bzw. aus der Differenzlaufzeit wird dann die Strömungsgeschwindigkeit des Mediums ermittelt. Der Durchflußmesser wird dabei durch zwei physikalische Rahmenbedingungen in seiner Meßdynamik begrenzt, nämlich zum einen durch die erzielbare Laufzeitdifferenz mit dem Ultraschallstrahl sowie zum anderen durch den durch die Meßstrecke entstehenden Druckabfall. Die erzielbare Laufzeitdifferenz bei parallel ausgerichteter Strömung zur Schallausbreitungsrichtung unter einem kreisrunden Querschnitt läßt sich nach folgender Formel berechnen:

$$dt = \frac{2\ K\ l\ Q}{d^2\ \left[cw^2 - \frac{(K\ Q)^2}{(d)^2}\right]}$$

l:   Länge [mm]
Q:   Durchfluß [l/h]
d:   Durchmesser [mm]
cw:   Schallgeschwindigkeit [m/s]
K:   $4/(3{,}6^* \pi)$

Dabei stellen d und 1 Konstruktionsparameter dar, die variabel gestaltet werden können. Je länger die Meßstrecke 1 und je kleiner der Durchmesser d ist, desto größer ist die erzielbare Laufzeitdifferenz dt. Die Länge der Meßstrecke wird jedoch durch die maximale Baugröße des Zählers begrenzt. Auch der Durchmesser des Zählers ist in Folge des maximal zulässigen Druckverlustes z. B. von 1 bar bei dem maximalen Durchfluß auf eine Mindestgröße begrenzt. Bei einem geraden Rohr bei turbulenter Strömung kann der Zusammenhang zwischen Druckverlust $\Delta p$, Durchmesser d und Rohrlänge 1 durch folgende Formel beschrieben werden:

$$\Delta p = const. \ (1/d^4)\ Q^2$$

Aus dieser Formel wird ersichtlich, daß gerade für hohe Durchflüsse mit einer turbulenten Strömung die Reduzierung des Durchmessers stark begrenzt ist.

Aus DE 199 30 278 A 1 ist ein Ultraschallzähler zur Bestimmung des Strömungsvolumens einer strömenden Flüssigkeit bekannt, der zwei Ultraschallwandler aufweist, die seitlich neben dem Strömungskanal einer Meßstrecke angeordnet sind. Die Ultraschall-Strahlung wird im wesentlichen senkrecht zur Achse der Meßstrecke eingekoppelt und über Reflektoren im wesentlichen zur Achse der Meßstrecke umgelenkt, wobei die beiden gegenüberliegenden Reflektoren jeweils mit einer oder mehreren Strömungs-Öffnungen zum direkten Durchleiten der Flüssigkeit in die Meßstrecke zwischen den Reflektoren versehen sind. Der Vorteil besteht darin, daß keine Strömungsumlenkung erforderlich ist und trotz der Reflektionselemente keine wesentliche Störung des Strömungsprofils entsteht.

Der Erfindung liegt die Aufgabe zugrunde, einen Durchflußmesser mit den Merkmalen des Oberbegriffes des Anspruchs 1 derart auszubilden, daß eine genauere Messung, insbesondere bei niedrigen Durchflüssen durchführbar ist.

Diese Aufgabe wird durch die gesamte Lehre des Patentanspruchs 1 gelöst. Vorteilhafte Weiterbildungen des Durchflußmessers ergeben sich aus den Unteransprüchen 2—11.

Zur Lösung dieser Aufgabe ist erfindungsgemäß in der Meßkammer mindestens ein Mittel zur Erzeugung mindestens eines Strahls des zu messenden Mediums vorgesehen, wobei die Ultraschallsignale den Strahl zumindest teilweise durchsetzen. Bis zu einer bestimmten Strömungsgeschwindigkeit des in die Meßkammer hineinströmenden Mediums bildet sich der Strahl als Freistrahl aus, so daß laminare Strömungsverhältnisse vorliegen und eine Vermischung bzw. Verwirbelung und damit eine Reduzierung der Strömungsgeschwindigkeit ausbleibt. Das Ultraschallsignal durchsetzt über eine möglichst lange Strecke den ohne Reibungsverlusten ausgebildeten Strahl, so daß eine im Vergleich zum Stand der Technik wesentlich genauere Messung durchgeführt werden kann, ohne daß die Abmessungen der Meßkammer in Länge und Breite geändert werden müssen.

Durch den mittels des Freistrahls erzeugten Meßeffekt kann auch die Länge der Meßstrecke verkürzt werden oder eine höhere Meßdynamik bzw. Meßgenauigkeit erreicht werden.

Erhöht sich die Strömungsgeschwindigkeit, so entstehen im Freiraum Turbulenzen, die den Strahl verwirbeln mit der Folge, daß der relative Meßeffekt in Abhängigkeit von der Durchflußmenge sinkt. In diesem Fall ist aber die Strömungsgeschwindigkeit groß genug, um eine genügend große Differenzlaufzeit zu bilden. Die Messung ist auf einen Strahl nicht mehr angewiesen. Durch den Freiraum bleibt zusätzlich im Gegensatz zu einem konstanten Querschnitt einer Meßstrecke der Druckabfall des strömenden Mediums im System relativ niedrig, so daß erst bei höheren Durchflüssen die Druckabfallsgrenze erreicht wird.

Unter dem Mittel zur Erzeugung eines Strahles ist stets auch ein Mittel zur Erzeugung mindestens eines Strahles zu verstehen. An das Mittel zur Stahlerzeugung kann ein Freiraum angrenzen, in den das Medium als Strahl eintritt. Zweckmäßigerweise kann der Freiraum eine Mindestlänge aufweisen, die der maximalen Länge des Strahls entspricht, so daß sich der Strahl zumindest in seiner Länge möglichst frei ausbilden kann. Der Durchmesser des Freiraums kann so bemessen sein, daß der Strahl bei einer Strömung unterhalb der kritischen Reynold'schen Zahl $Re_{krit}$ die Wandung im Bereich der Meßstrecke nicht berührt. Dabei kann das Medium bei einer Strömung unterhalb der kritischen Reynold'schen Zahl $Re_{krit}$ in den Freiraum als Strahl eintreten, der insbesondere als Freistrahl ausgebildet ist. Der Freistrahl berührt im Bereich des Freiraumes die Wandung der Meßkammer nicht, so daß in diesem Bereich keine wesentlichen Geschwindigkeitsverluste auftreten können, die zu einer Reduzierung der gemessenen Durchflußmenge führen würden.

Vorteilhafterweise kann das Mittel zur Erzeugung eines Strahls als Blende mit mindestens einer Öffnung ausgebildet sein, wobei die Öffnung insbesondere als Düse geformt sein kann. Die Blende kann in einfacher, platzsparender und stabiler Weise in die Meßkammer eingesetzt werden und dabei an der Wandung der Meßkammer anliegen. Die Düse dient der richtungsorientierten Ausbildung des Mediums als Strahl im daran angrenzenden Freiraum. Es ist jedoch auch möglich, daß das Mittel zur Erzeugung eines Strahls im wesentlichen rohrförmig ausgebildet ist, womit ebenfalls eine Strahlausbildung des zu messenden Mediums herbeigeführt werden kann.

Zweckmäßigerweise kann die Außenkontur der mindestens einen Öffnung der Innenkontur des Freiraumes entsprechen, damit sich der Strahl optimal ausbilden kann.

Das Verhältnis der Querschnittsfläche der Öffnung zu der Querschnittsfläche des Freiraumes kann vorteilhafterweise höchstens 0,7, insbesondere etwa 0,35 bis 0,5 betragen, so daß ein sinnvoller die Meßdynamik erhöhender Freistrahl entsteht. Ist nämlich die Öffnung im Verhältnis zum Freiraum zu klein, so wird der Druckabfall im wesentlichen durch die Öffnung bestimmt. Das bedeutet, daß eine Vergrößerung des Freiraums keine weiteren Vorteile für die Meßdynamik bringt. Aus konstruktiven oder fertigungstechnischen Gründen kann eine Vergrößerung des Freiraums jedoch durchgeführt werden. Ist das Verhältnis zu groß, kann sich kein die Meßdynamik erhöhender Freistrahl ausbilden, so daß die Querschnittsfläche des Freiraums das den Druckabfall bestimmende Element darstellt.

Weiterhin ist das Querschnittsverhältnis von der Länge des Freiraumes abhängig. Je länger dieser ist, desto kleiner ist idealerweise das Querschnittsverhältnis zu wählen. In Näherung gilt etwa folgende Gleichung:

$$A_s \, / \, A_f = \, ? \, L/A_f \; \text{für} \; A_s \, / \, A_f \, ? \, 0,7$$

$A_s$ = Querschnittsfläche Öffnung
$A_f$ = Querschnittsfläche Freiraum
L = Länge des Freiraums

Zur weiteren Verbesserung der Meßdynamik kann mindestens ein Drucksensor vorgesehen sein, mit dem schallwellenabhängige Meßsignale zur Schallaufzeitermittlung erzeugbar sind. Mittels der Drucksensoren kann ein vollständig reziprok arbeitendes Meßverfahren zur Ermittlung der Differenzlaufzeit durchgeführt werden. Die Messung kann damit von Abweichungen z. B. in der Anordnung der Ultraschallwandler unabhängig sein. Es ist möglich, daß der Drucksensor einem Ultraschallwandler oder einem Reflektor zugeordnet ist oder auch separat vorgesehen ist.

Zur Festlegung der Meßstrecke kann mindestens ein Ultraschallwandler und/oder auch mindestens ein Drucksensor vorgesehen sein. Der Drucksensor kann dabei an einem Ende der Meßstrecke oder auch innerhalb der Meßstrecke angeordnet sein. Als Meßstrecke soll im folgenden der gesamte Schallaufweg definiert sein. Der wesentliche Meßeffekt in der Meßstrekke wird durch die Überschneidungszone des Ultraschallstrahls und dem Strömungsstrahl gebildet, wobei die Strömungsrichtung und die Schallrichtung idealerweise parallel geführt werden. Man kann aber auch durchaus diagonale Überschneidungszonen bilden, wobei dann nur die sich überschneidenden Anteile zu einer Laufzeitdifferenz führen.

Ebenso kann zur Festlegung der Meßstrecke bzw. zur Schallführung mindestens ein Reflektor vorgesehen sein, der die Ultraschallsignale in eine definierte Richtung weiterleitet bzw. rückreflektiert. Der Reflektor kann dabei vorteilhafterweise so angeordnet sein, daß ein möglichst großer Teil der Meßstrecke im ausgebildeten Strahl des Mediums verläuft.

Mit besonderem Vorteil kann die Meßstrecke von dem Mittel zur Strahlerzeugung bis zum endseitigen Bereich des Strahl verlaufen, so daß ein möglichst breiter Bereich des strömenden Mediums zur Messung herangezogen werden kann. Die Länge des Strahls wird damit optimal ausgenutzt.

Die Meßstrecke kann im wesentlichen parallel zur Wandung der Meßkammer verlaufen. Die Ultraschallwandler bzw. Drucksensoren oder Reflektoren sind dazu entsprechend in der Meßkammer zur Festlegung der Meßstrecke angeordnet. Zumindest ein Ende der Meßstrecke kann jedoch auch außerhalb der Hauptströmung bzw. des Strahls vorgesehen sein. Der wesentliche Meßeffekt wird dabei in der Überschneidungszone des Ultraschallstrahls und dem Strömungsstrahl gebildet.

Die Meßstrecke kann im wesentlichen diagonal im Freiraum der Meßkammer verlaufen, so daß die Ultraschallwandler, Drucksensoren und/oder Reflektoren in vorteilhafter Weise an der Wandung oder in einem seitlichen Bereich der Blende angeordnet werden können. Durch die seitliche Anordnung der genannten Bauteile wird die zur Verfügung stehende Querschnittfläche in der Meßkammer nur geringfügig reduziert. In beiden Fällen ist es möglich, daß der Strahl ebenfalls parallel zur Wandung der Meßkammer oder diagonal in dem Freiraum der Meßkammer eintritt, wobei er in jedem Falle von den Ultraschallsignalen durchsetzt wird.

Für eine zuverlässige Messung kann der Winkel $\alpha$ zwischen der Meßstrecke und dem Strahl zwischen 0° und 45° betragen. Je kleiner der Winkel $\alpha$ gewählt wird, desto besser kann die Messung durchgeführt werden.

Mindestens ein Ultraschallwandler und/oder mindestens ein Drucksensor und/oder mindestens ein Reflektor können in einer Mulde der Meßkammer angeordnet sein. Auf diese Weise erzeugen sie nicht einen zusätzlichen Strömungswiderstand des zu messenden Mediums.

Der mindestens eine Reflektor zur Leitung des Ultraschallsignals kann im Bereich des Mittels zur Strahlerzeugung angeordnet sein und damit die Möglichkeit schaffen, daß der Winkel $\alpha$ zwischen der Meßstrecke und dem Strahl möglichst klein ausfällt. Außerdem kann mittels dieser Anordnung der Ultraschall sehr früh mit dem Strahl überlagert werden.

Das Mittel zur Strahlerzeugung kann mindestens zwei Öffnungen aufweisen, die so ausgerichtet sind, daß die damit erzeugten Teilstrahlen des Mediums in die Meßstrecke eintreten und/oder sich in der Meßstrecke bündeln. Zweckmäßigerweise können dabei die mindestens zwei Öffnungen in gleichem Abstand zueinander und/oder zum Mittelpunkt des Mittels zur Strahlerzeugung angeordnet sein, so daß sich die Teilstrahlen gleichmäßig im Freiraum ausbilden und gegebenenfalls zu einem gemeinsamen Strahl vereinigen. Zum anderen besteht der Vorteil dieser Anordnung darin, daß im Mittelpunkt des Mittels zur Strahlerzeugung Platz zur Anordnung eines Ultraschallwandlers zur Verfügung steht. Der gegenüberliegende Ultraschallwandler oder Drucksensor kann ebenfalls zentrisch angeordnet werden, so daß sich die Meßstrecke sowie der Strahl des Medium vollständig überlagern.

Es besteht auch die Möglichkeit, daß der mindestens eine Ultraschallwandler und/oder der mindestens eine Drucksensor und/oder der mindestens eine Reflektor in dem Mittel zur Strahlerzeugung integriert ist, was insbesondere bei der Montage des Durchflußmessers von Vorteil ist. Die elektrischen Anschlüsse des Ultraschallwandlers, Drucksensors oder Reflektors können an der Blende entlang durch eine Öffnung an der Wandung radial nach außen geführt werden.

Mit besonderem Vorteil kann die Meßkammer zumindest im Bereich des Freiraums mit einem wärmeisolierenden und/oder schalldämpfenden Material ausgekleidet sein. Die Wärmeisolierung ist von Vorteil, wenn sich bei niedriger Strömungsgeschwindigkeit das Gehäuse insbesondere im Bereich des Freiraumes aufgrund der Wärmeabgabe des Mediums an die Wandung abkühlt. Die Folge ist, daß vor und nach der Blende unterschiedliche Temperaturen vorherrschen. Strömt das Medium bei niedriger Strömungsgeschwindigkeit laminar durch die Blende, so hat der sich ausbildende Strahl eine andere Temperatur als das Medium im Freiraum, in den er einströmt. Da aber z. B. Wasser bei unterschiedlichen Temperaturen eine unterschiedliche Dichte aufweist, kommt es zu einem Auftrieb bzw. Abtrieb und damit zu einer Ablenkung des Strahls, was zu Meßfehlem führen würde. Durch die Auskleidung der Meßkammer im Bereich des Freiraumes mit dem wärmeisolierenden Material kann man diesem Effekt gegensteuern, da dadurch der Wärmeabtransport reduziert bzw. verhindert wird. Zusätzlich oder alternativ kann das Auskleidungsmaterial auch die Funktion einer Schalldämpfung übernehmen, damit parasitäre Schallanteile die Messung nicht verfälschen. Wird die Isolierung außerhalb des Gehäuses angebracht, findet zusätzlich über die Wärmeleitung der Wandungen des Gehäuses ein Temperaturausgleich statt, wobei aber die Abkühlung durch das Gehäuse reduziert wird.

Alternativ oder zusätzlich kann das Mittel zur Erzeugung des Strahls wärmeleitend ausgebildet sein. Die Folge ist, daß die Temperaturdifferenz zwischen dem Freiraum und dem Bereich davor möglichst klein gehalten wird und der negative Effekt der Strahlablenkung nicht entsteht.

Gemäß einer alternativen Ausführungsform ist es möglich, daß die Meßstrecke vor dem Mittel zur Strahlerzeugung beginnt bzw. endet. Dabei kann der mindestens eine Ultraschallwandler und/oder der mindestens eine Drucksensor und/oder der mindestens eine Reflektor vor dem Mittel zur Strahlerzeugung angeordnet sein, wobei die Ultraschallsignale durch die mindestens eine Öffnung des Mittels zur Strahlerzeugung laufen. Die am anderen Ende der Meßstrecke vorgesehene Sende-/Empfangseinheit kann so angeordnet sein, daß die Meßstrekke parallel zur Strömung bzw. zum Strahl verläuft.

In der zuletzt beschriebenen Ausführungsform werden beide Enden der Meßstrecke (z. B. die jeweils endseitig angeordneten Ultraschallwandler) von dem Medium umströmt. Zur Druckminimierung kann an den endseitigen Bereichen der Meßstrecke, insbesondere an den dort angeordneten Ultraschallwandlern, ein Strömungskörper vorgesehen sein, der das strömende Medium ohne wesentliche Druckverluste in die Meßstrecke einleitet bzw. von dieser herausführt.

Der Ultraschallwandler und/oder der Drucksensor und/oder der Reflektor können Stützrippen zur Verbindung mit der Wandung und/oder zur Gleichrichtung der Einlaufströmung aufweisen. Dabei können die Stützrippen in ihrer Geometrie z. B. in ihrer Länge so gewählt werden, daß die Einlaufströmung gleichgerichtet wird. Damit wird eine Reduzierung von Einlaufstörungen (z. B. Verwirbelungen) erzielt.

Die Öffnung bzw. die Düse der Blende kann so ausgestaltet sein, daß divergierende oder parasitäre Schallsignale zur Wandung der Meßkammer abgelenkt werden. Die Durchschallung der Blende ist mit dem Nachteil verbunden, daß Schallanteile an der Oberfläche der Blende reflektiert werden. Diese Schallanteile können z. B. auf die Ultraschallwandler zurückgeworfen werden und sich dann phasenverschoben mit dem Nutzschallstrahl überlagern. Diesen Nachteil kann man durch die besondere Ausgestaltung der Krümmung der Blende verhindern, mit welcher stark divergierende Schallstrahlen zur Wandung der Meßkammer abgelenkt werden.

Die Wandung der Meßkammer kann ultraschalldämpfend ausgebildet sein und die stark divergierenden oder die von der Düse abgelenkten Ultraschallsignale so stark dämpfen, daß eine Beeinflussung des Nutzschallstrahls vernachlässigbar wird. Die Dämpfung kann z. B. durch Streuung, Reflexion und/oder Resorption der Schallsignale erfolgen. Dazu kann ein entsprechendes Mantelmaterial und/oder eine entsprechende Oberflächenstruktur des Mantelmaterials oder der Wandung der Meßkammer vorgesehen sein.

Ist der Durchflußmesser bzw. die Meßkammer entsprechend ausgebildet, kann das Mittel zur Strahlerzeugung seitlich in einer Krümmung der Meßkammer oder an einem Mittel zur Strömungsumlenkung des Mediums angeordnet bzw. integriert sein. Ferner kann an mindestens einer Krümmung der Meßkammer oder an einem Mittel zur Strömungsumlenkung des Mediums ein Ultraschallwandler und/oder ein Drucksensor und/oder ein Reflektor angeordnet sein. Durch die Anordnung der Bauteile in der Krümmung ist keine weitere Haltevorrichtung erforderlich. Der Freiraum, in den der Strahl eintritt, kann sich zwischen zwei Krümmungen befinden. Das andere Ende der Meßstrecke kann in der gegenüberliegenden Krümmung vorgesehen sein.

Ferner kann die Meßkammer an ein Einrohr-Anschluß-Gehäuse angeordnet sein, dessen insbesondere ringförmiger Einlaßkanal in den Einlaßkanal der Meßkammer führt, und/oder der Auslaßkanal der Meßkammer in einen insbesondere zentral liegenden Auslaßkanal des Einrohr-Anschluß-Gehäuses übergeht.

In einem weiteren bevorzugten Ausführungsbeispiel kann in einer runden Meßkammer eine Mehrzahl von Mitteln zur Strahlerzeugung vorgesehen sein. Die Mittel zur Strahlerzeugung können dabei zweckmäßigerweise im Anschluß an die jeweiligen Einlaßkanäle angeordnet sein. Die Mittel zur Strahlerzeugung bzw. deren Öffnungen oder Düsen können in dieser Ausführungsvariante so angeordnet sein, daß sie eine Drallbewegung des zu messenden Mediums bewirken. Das Medium strömt demnach kreisförmig durch die runde Meßkammer. Ferner kann in der runden Meßkammer mindestens ein Steg vorgesehen sein, der bei hohem Durchfluß, wenn die Strömung die Meßkammer in ihrer gesamten Höhe ausfüllt, die Drallbewegung des Mediums an Deckel und Boden bremst. Zweckmäßigerweise sind mehrere Stege vorgesehen, die gleichmäßig und in einer im wesentlichen radialen Ausrichtung über die Meßkammer verteilt sind.

In einer weiteren Ausführungsvariante kann mindestens ein Ultraschallwandler als Ringwandler ausgeführt sein. Das Mittel zur Strahlerzeugung kann dabei vor dem Ringwandler oder nach dem Ringwandler angeordnet sein. Das Mittel zur Strahlerzeugung kann jedoch auch mit dem Ringwandler eine Einheit bilden und auf diese Weise die Montage des Durchflußmessers erleichtern.

Mit besonderem Vorteil können mindestens zwei unterschiedliche Meßstrecken vorgesehen sein, die die Strömung bzw. den Strahl auf unterschiedlichen Wegen durchschallen. So können z. B. zwei unterschiedlich lange Meßstrecken vorgesehen sein. Durch die unterschiedlich langen Wege sind die Schallsignale zeitlich separierbar. Je nach Ausprägung der Strömung ist die Laufzeitdifferenz auf den beiden Schallwegen unterschiedlich. Diese Information kann für eine Korrektur der mittleren Laufzeitdifferenz benutzt werden, so daß Änderungen in der Strömungsgeometrie kompensiert werden können. Außerdem kann mit den unterschiedlichen Meßstrecken eine Information über die Form der Strömung bzw. die Art der Durchschallung erhalten werden.

Die Blende kann auch zumindest teilweise schalldurchlässig sein, so daß z. B. keine divergierenden Schallsignale erzeugt werden.

Die Erfindung ist anhand von vorteilhaften Ausführungsbeispielen in den Zeichnungsfiguren näher erläutert. Diese zeigen:

Fig. 1          einen Schnitt durch eine Meßkammer bei niedriger Strömungsgeschwindigkeit,

Fig. 2          einen Schnitt durch die Meßkammer gemäß Fig. 1 bei hoher Strömungsgeschwindigkeit,

Fig. 3          einen Schnitt durch einen Ausschnitt einer Meßkammer,

Fig. 4       einen Schnitt durch eine alternative Ausführungsform einer Meßkammer,

Fig. 5       einen Schnitt durch eine weitere alternative Ausführungsform einer Meßkammer,

Fig. 6       eine Draufsicht auf die Blende gemäß Fig. 5 in Blickrichtung V,

Fig. 7       einen Schnitt durch einen Ausschnitt einer weiteren Ausführungsvariante einer Meßkammer,

Fig. 8       einen Schnitt durch eine weitere Ausführungsvariante einer Meßkammer,

Fig. 9       einen Schnitt durch eine weitere Ausführungsvariante einer Meßkammer,

Fig. 10       einen Schnitt durch eine weitere Ausführungsvariante einer Meßkammer,

Fig. 11       eine vergrößerte Darstellung des Blendenbereiches gemäß Fig. 10,

Fig. 12       eine Draufsicht auf die Stützrippen gemäß Fig. 10 in Blickrichtung X,

Fig. 13       einen Schnitt durch eine Meßkammer mit einer Krümmung,

Fig. 14       eine alternative Ausführungsvariante der Meßstrecke gemäß Fig. 13,

Fig. 15       einen Schnitt durch eine Meßkammer im Anschluß an ein Einrohr-Anschluß-Gehäuse,

Fig. 16       eine Schnittdarstellung entlang der Linie XV - XV aus Fig. 15,

Fig. 17       einen Schnitt durch eine runde Meßkammer in Draufsicht,

Fig. 18       eine prinzipielle Darstellung eines Ringwandlers in Draufsicht,

Fig. 19 — 21       Schnittdarstellungen von möglichen Ausführungsvarianten eines Ringwandlers entlang der Linie XVIII — XVIII aus Fig. 18 sowie

Fig. 22       eine prinzipielle Darstellung einer weiteren möglichen Ausführungsvariante einer Meßkammer in Seitenansicht sowie

Fig. 23       ein Schnittdarstellung entlang der Linie XXII — XXII aus Fig. 22.

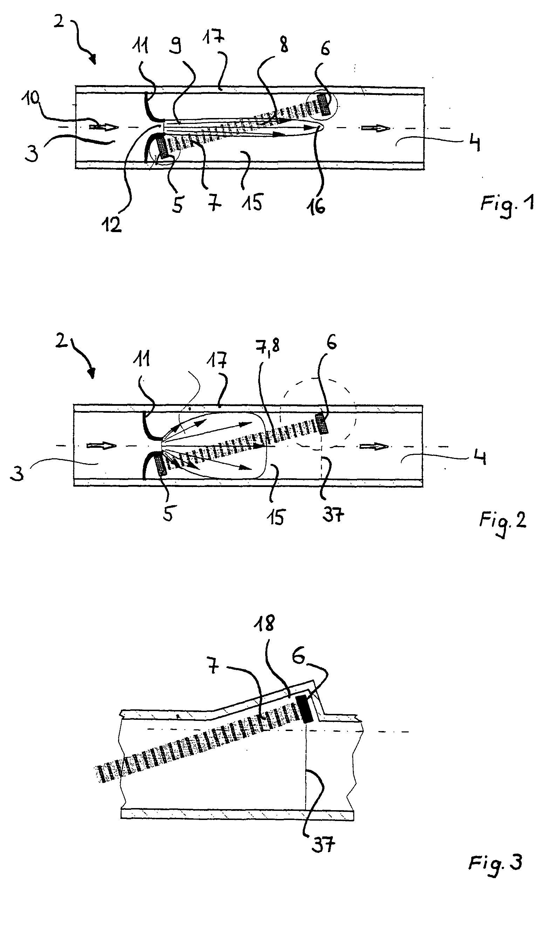

Fig. 1 zeigt von dem Durchflußmesser für flüssige oder gasförmige Medien die von dem Medium zumindest teilweise durchströmte Meßkammer 2. An die Meßkammer 2 schließt sich auf der einen Seite ein Einlaßkanal 3 und auf der anderen Seite ein Auslaßkanal 4 an. In der Meßkammer 2 sind zwei Ultraschallwandler 5, 6 zur Erzeugung und zum Empfang von Ultraschallsignalen 7 und zur Festlegung einer Meßstrecke 8 vorgesehen. Die Meßstrecke 8 bezeichnet demnach im folgenden den gesamten Schallaufweg. Die eigentliche Messung erfolgt in der Überschneidungszone von Ultraschallstrahl und Strömungsstrahl 9. In der Meßkammer 2 ist ferner ein Mittel zur Erzeugung eines Strahls 9 des zu messenden Mediums vorgesehen, wobei die Ultraschallsignale 7 den Strahl 9 zumindest teilweise durchsetzen. Das Mittel zur Erzeugung eines Strahls ist als Blende mit einer Düse 12 ausgebildet. Das Mittel zur Erzeugung von mindestens einem Strahl kann jedoch auch anders geformt sein und z. B. rohrartig ausgebildet sein. Die Strömungsrichtung 10 des Mediums wird durch Pfeile verdeutlicht. In Fig. 1 ist die Strahlausbildung bei einer geringen Durchflußmenge des Mediums dargestellt. In Fig. 2 dagegen werden die Strömungsverhältnisse bei einer erhöhten Strömungsgeschwindigkeit des Mediums verdeutlicht. Nach dem Durchströmen der Blende 11 entsteht in diesem Fall kein Strahl, sondern eine Verwirbelung des Mediums, das bis an die Wandung der Meßkammer 2 heranreicht. Im ersten Fall gemäß Fig. 1 liegen laminare Strömungsverhältnisse vor, so daß eine Vermischung und damit eine Reduzierung der Strömungsgeschwindigkeit nicht stattfindet. Der Strahl 9 berührt die Wandung 17 der Meßkammer 2 nicht und es findet kein Druckverlust statt, der zu Meßfehlern beitragen würde. Bei der hohen Strömungsgeschwindigkeit und der sich dadurch bildenden Verwirbelung gemäß Fig. 2 ist die Strömungsgeschwindigkeit dagegen groß genug, um eine genügend große Differenzlaufzeit zu bilden. Mit Hilfe dieser Anordnung ist es demnach möglich, den Meßeffekt bei einer niedrigen Durchflußmenge zu erhöhen, ohne den Druckverlust bei einer hohen Durchflußmenge, wo genügend Meßeffekt vorhanden ist, zu reduzieren.

An das Mittel zur Strahlerzeugung grenzt ein Freiraum 15 an, in den das Medium als Strahl 9 eintritt (siehe u. a. Fig. 1). Das Medium tritt bei einer Strömung unterhalb der kritischen Reynold'schen Zahl $Re_{krit}$ in den Freiraum 15 als Strahl 9 ein. Bei der kritischen Reynold'schen Zahl $Re_{krit}$ ist die laminare Strömung gerade noch stabil. Oberhalb $Re_{krit}$ dagegen entstehen nach der Düse 12 Turbulenzen gemäß Fig. 2.

Die Außenkontur der Düse 12 ist im wesentlichen der Innenkontur des Freiraumes 15 angepaßt. Im vorliegenden Fall sind die Konturen kreisförmig. Das Verhältnis der Querschnittsfläche der Düse 12 zu der Querschnittsfläche des Freiraumes 15 beträgt höchstens 0,7, insbesondere etwa 0,35 bis 0,5, womit ein für die Meßdynamik optimaler Freistrahl entsteht.

Zusätzlich oder alternativ zu dem mindestens einem Ultraschallwandler 5, 6 kann mindestens ein Drucksensor vorgesehen sein, mit dem schallwellenabhänige Meßsignale zur Schallaufzeitermittlung erzeugbar sind. Der Drucksensor kann auch zur Festlegung einer Meßstrecke 8 vorgesehen sein.

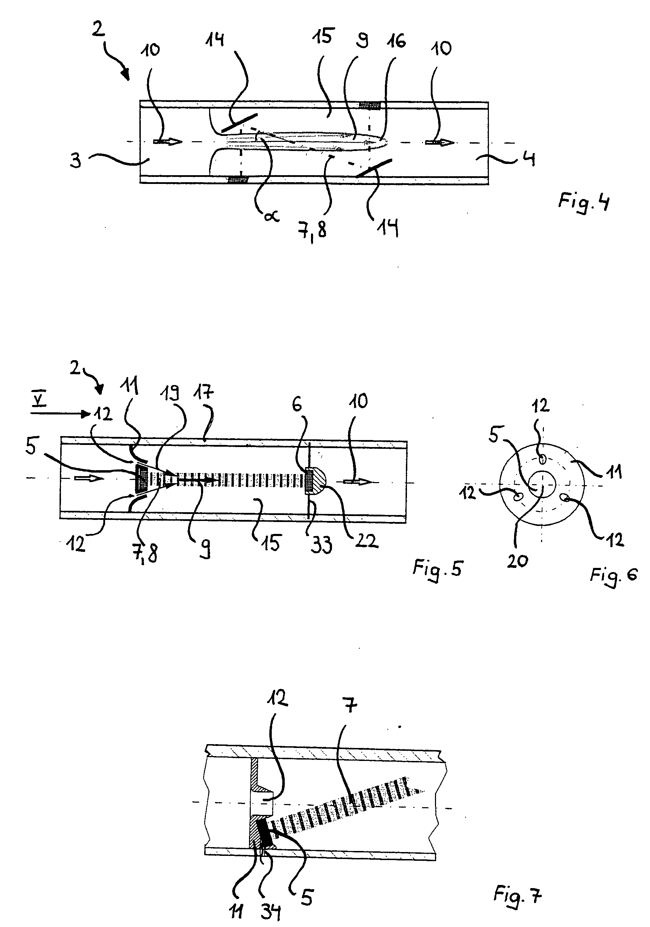

Gemäß der Ausführungsform aus Fig. 4 sind zur Festlegung der Meßstrecke 8 bzw. zur Ultraschallführung zwei Reflektoren 14 vorgesehen sein. Die Reflektoren 14 leiten die Ultraschallsignale 7 durch den Strahl 9.

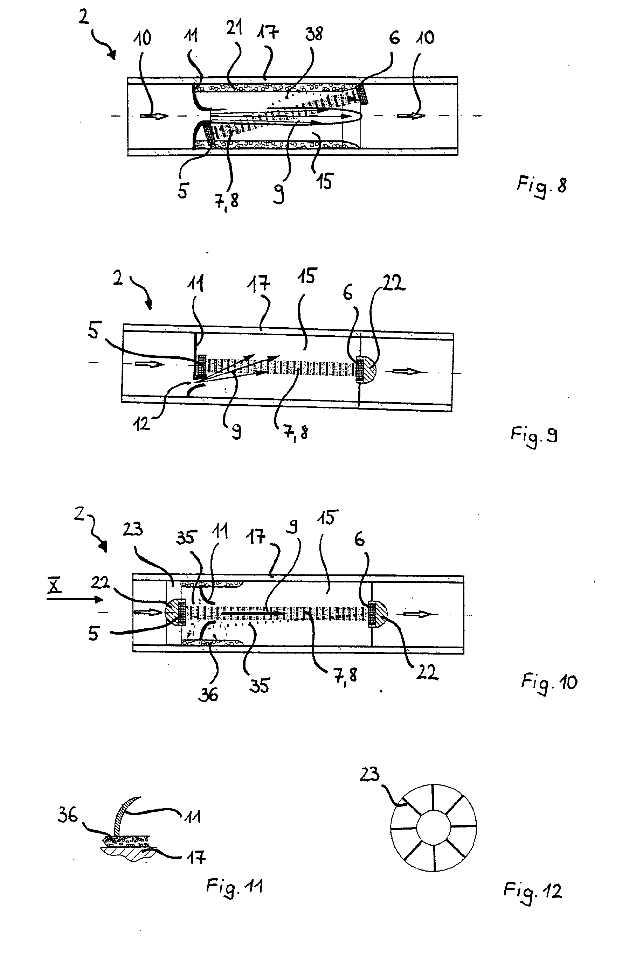

Um die Strahlausbildung des Mediums möglichst optimal für die Messung auszunutzen, verläuft die Meßstrecke 8 von der Blende 11 bis zum endseitigen Bereich 16 des Strahls 9. In den Meßkammern 2 gemäß den Figuren 1, 2, 3, 4, 7 sowie 8 verläuft die Meßstrecke 8 im wesentlichen diagonal im Freiraum 15 der Meßkammer 2. Die Strahlausbildung dagegen verläuft in diesen Fällen im wesentlichen parallel zur Wandung 17 der Meßkammer 2. In den Anordnungsvarianten der Figuren 5, 9, 10, 13, 14, 15, 16, 19, 20 und 23 dagegen verläuft die Meßstrecke 8 im wesentlichen parallel zur Wandung 17 der Meßkammer 2. Der Strahl 9 kann sich dabei im wesentlichen mit der Meßstrecke 8 überlagern oder auch, wie in Fig. 9 dargestellt ist, schräg zur Meßstrecke 8 verlaufen. Der Winkel $\alpha$ zwischen der Meßstrecke 8 und dem Freistrahl 9 beträgt in den Beispielen zwischen 0° und 45°, womit eine zuverlässige Messung durchführbar ist.

Der Ultraschallwandler 6 (oder Reflektor oder Drucksensor) ist in der Ausführungsvariante gemäß Fig. 3 in einer Mulde 18 der Meßkammer 2 angeordnet. Damit wird vermieden, daß an dieser Stelle eine Reduzierung der Querschnittsfläche 37 der Meßkammer 2 entsteht, welche zu einer Verwirbelung des Strahls 9 oder zu einem Druckabfall führen kann.

In Fig. 4 ist der eine Reflektor 14 neben der Düse 12 angebracht, so daß der Ultraschall sehr früh den Strahl 9 überlagert. Der Vorteil dieser Anordnung besteht ferner darin, daß der Winkel $\alpha$ zwischen dem Strahl 9 und der Schallausbreitungsrichtung relativ klein wird.

Die Blende 11, die in den Fig. 5 und 6 dargestellt sind, weist drei Öffnungen bzw. Düsen 12 auf, die so ausgerichtet sind, daß die damit erzeugten Teilstrahlen 19 des Mediums in die Meßstrecke 8 eintreten und sich in der Meßstrecke 8 bündeln. Wie insbesondere aus Fig. 6 hervorgeht, sind die drei Düsen 12 in gleichem Abstand zueinander und zum Mittelpunkt 20 der Blende 11 angeordnet. Bei niedrigen Durchflüssen entsteht durch die laminare Schichtströmung ein gemeinsamer Strahl 9, der dann im Ultraschallstrahl verläuft. Die Meßstrecke 8 verläuft dabei vom Mittelpunkt 20 der Düse 12, in den ein Ultraschallwandler 5 angeordnet ist, zum ebenfalls zentrisch angeordneten Ultraschallwandler 6, der mittels einer Haltevorrichtung 33 an der Wandung 17 befestigt und in seiner Lage fixiert ist. Die Meßstrecke 8 deckt sich bei dieser Anordnung direkt mit dem Strahl 9, so daß der vollständige Strahl 9 für die Duruchflußmessung herangezogen wird.

In dem Ausführungsbeispiel gemäß Fig. 7 ist der Ultraschallwandler 5 in die Blende 11 integriert. Die elektrischen Anschlüssen können durch die Öffnung 34 in einfacher Weise radial herausgeführt werden. Ebenso kann natürlich auch ein Drucksensor oder ein Reflektor in dem Mittel zur Strahlerzeugung integriert sein.

Die Meßkammer, die in Fig. 8 dargestellt ist, ist im Bereich des Freiraums 15 mit einem wärmeisolierenden und schalldämpfenden Material 21 ausgekleidet. Entstehen vor und nach der Blende 11 unterschiedliche Temperaturen $T_1$ und $T_2$ aufgrund einer niedrigen Strömungsgeschwindigkeit, so hat der sich ausbildende Strahl 9 eine höhere Temperatur als das Medium im Freiraum 15, in den er einströmt. Da z. B. das durchströmende Wasser bei unterschiedliche Temperaturen unterschiedliche Dichten aufweist, kommt es zu einem Auftrieb nzw. Abtrieb und damit zu einer Ablenkung des Wasserstrahls, was wiederum zu Meßfehlem führen würde. Durch die Auskleidung der Meßkammer 2 mit den wärmeisolierenden Material 21 wird dieser negativen Aufwirkung entgegengesteuert. Indem das Material zusätzlich schalldämpfend ausgeführt ist, können parasitäre Schallanteile nicht in die Meßstrecke 8 eindringen.

Zusätzlich ist auch die Blende 11 wärmeleitend ausgebildet, so daß die Temperaturdifferenz möglichst klein wird und keine Ablenkung des Strahls 9 stattfindet.

Die Anordnung gemäß Fig. 9 zeigt eine schräg gestellte Düse 12, durch die der Strahl 9 schräg in den Freiraum 15 eintritt. Die Meßstrecke 8 dagegen ist parallel und zentral in der Meßkammer 2 angeordnet.

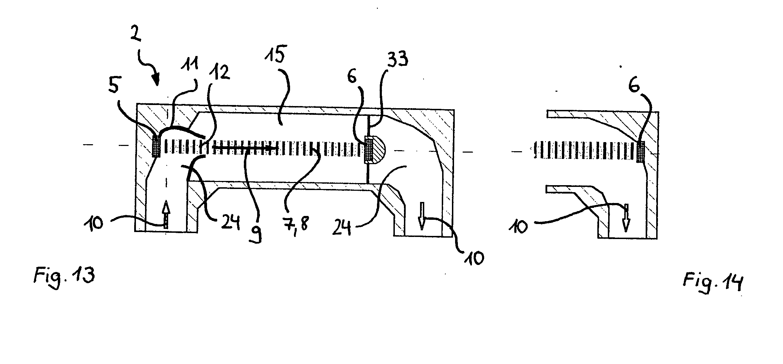

Wie bei der Anordnung in Fig. 10 gezeigt ist, ist es auch möglich, daß die Meßstrecke 8 vor dem Mittel zur Strahlerzeugung beginnt bzw. endet. Die Ultraschallsignale 7 durchlaufen dabei die Öffnung bzw. Düse 12 der Blende 11 und überlagern sich direkt mit dem durch die Düse 12 ausgebildeten Strahl 9. Der Ultraschallwandler 5 ist dabei vor der Blende 11 bzw. vor der Düse 12 angeordnet, während der zweite Ultraschallwandler 6 am Ende des Freiraums 15 ebenfalls zentral in der Meßkammer 2 angeordnet ist. An den Ultraschallwandlern 5, 6 sind Strömungskörper 22 zur Druckminimierung vorgesehen. Der Ultraschallwandler 5 weist ferner Stützrippen 23 zur Verbindung mit der Wandung 17 auf. Die Stützrippen sind in einer Draufsicht in Fig. 12 dargestellt. Die Stützrippen 23 sind so lange in Strömungsrichtung verlängert, daß die Einlaufströmung gleichgerichtet wird. Die Folge ist eine Reduzierung von Einlaufstörungen. Ein Teil der Düse 12 aus Fig. 10 ist in Fig. 11 vergrößert abgebildet. Die Düse 12 ist so ausgestaltet, daß stark divergierende Schallsignale der Ultraschallwandler 5, 6 oder parasitäre Schallsignale zur Wandung 17 der Meßkammer 2 abgelenkt werden. Die divergierenden Schallsignale 35 sind durch die gestrichelte Linie gekennzeichnet. Die Wandung 17 der Meßkammer 2 ist mit einem ultraschalldämpfenden Material 36 zumindest teilweise ausgekleidet, so daß die Beeinflussung des Nutzschallstrahls vernachläßigbar wird. Gegebenenfalls kann jedoch auch die Wandung 17 der Meßkammer 2 selbst ultraschalldämpfend ausgebildet sein.

In Fig. 13 ist das Mittel zur Strahlerzeugung seitlich in einer Krümmung 24 der Meßkammer 2 eingebaut. Das Mittel zur Strahlerzeugung bzw. die Blende 11 ist in der Krümmung 24 so integriert, daß der Strahl 9 in den Freiraum 15 einströmen kann. An der Krümmung 24 ist ebenfalls der Ultraschallwandler 5 angeordnet, so daß die Ultraschallsignale 7 ebenfalls die Düse 12 der Blende 11 durchlaufen. Der zweite Ultraschallwandler 6 am anderen Ende der Meßstrecke 8 ist ebenfalls zentral mittels einer Haltevorrichtung 33 angeordnet. Der zweite Ultraschallwandler 6 kann jedoch auch seitlich in der anderen Krümmung 24 (siehe Fig. 14) angeordnet sein und damit die Querschnittsfläche in der Meßkammer 2 nicht reduzieren.

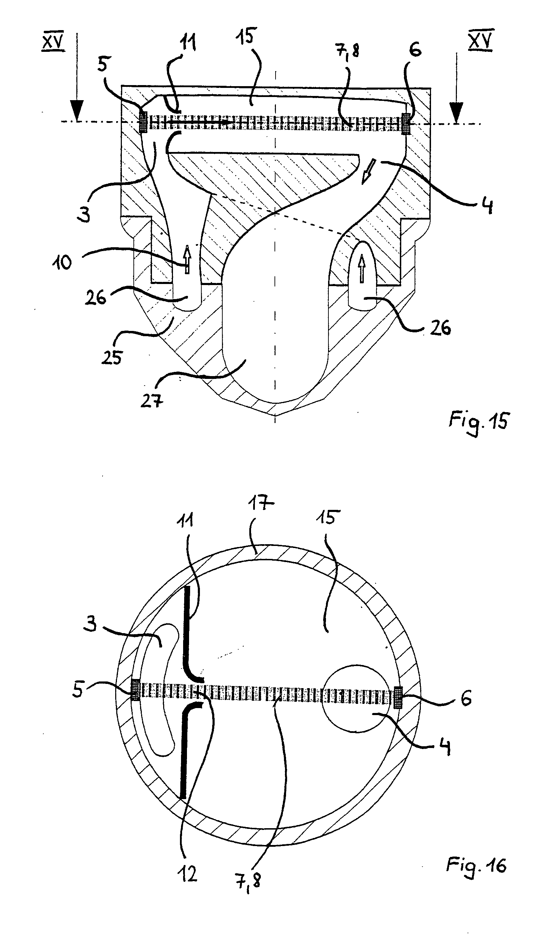

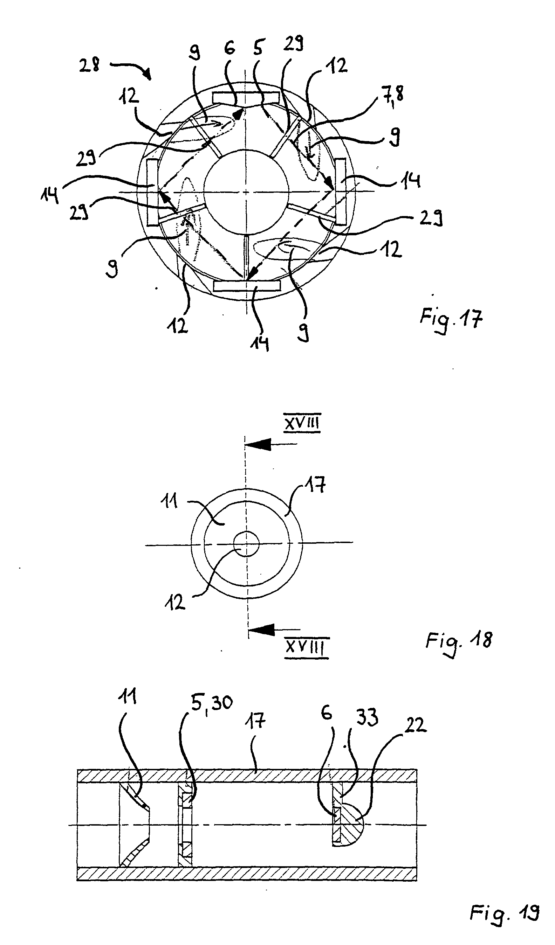

Fig. 15 zeigt eine Konstruktionsvariante von Fig. 13, wobei die Meßkammer 2 an ein Einrohr-Anschluß-Gehäuse 25 angeordnet ist. Der ringförmige Einlaßkanal 26 des Einrohr-Anschluß-Gehäuses 25 führt in den nierenförmigen Einlaßkanal 3 der Meßkammer 2 (siehe auch Fig. 16). Das zu messende Medium strömt durch die Düse 12 der Blende 11 in den Freiraum 15 und wird über den Auslaßkanal 4 in den zentral liegenden Auslaßkanal 27 des Einrohr-Anschluß-Gehäuses 25 geführt.

Fig. 17 zeigt eine weitere Variante von Fig. 15 bzw. 16. In der runden Meßkammer 2 sind eine Mehrzahl von Düsen 12 zur Strahlerzeugung vorgesehen. Die Düsen 12 sind so angeordnet, daß sie eine Drallbewegung des zu messenden Mediums bewirken. Der Ultraschall wird über mehrere Reflektoren 14 durch die Meßkammer 2 geführt. Die Ultraschallsignale 7 werden so durch die runde Meßkammer 2 geleitet, daß sie die Strahlen 9 durchsetzen. In der runden Meßkammer 2 sind außerdem Stege 29 zur Abbremsung der Drallbewegung des Mediums vorgesehen, welche dann erforderlich ist, wenn die Strömung die Meßkammer 2 in Ihrer gesamten Höhe ausfüllt.

In den Figuren 18 — 21 ist mindestens ein Ultraschallwandler 5, 6 als Ringwandler 30 ausgeführt. In Fig. 19 ist der eine Ultraschallwandler 5 als Ringwandler 30 und der gegenüberliegende Ultraschallwandler 6 als konventioneller Wandler aufgeführt.

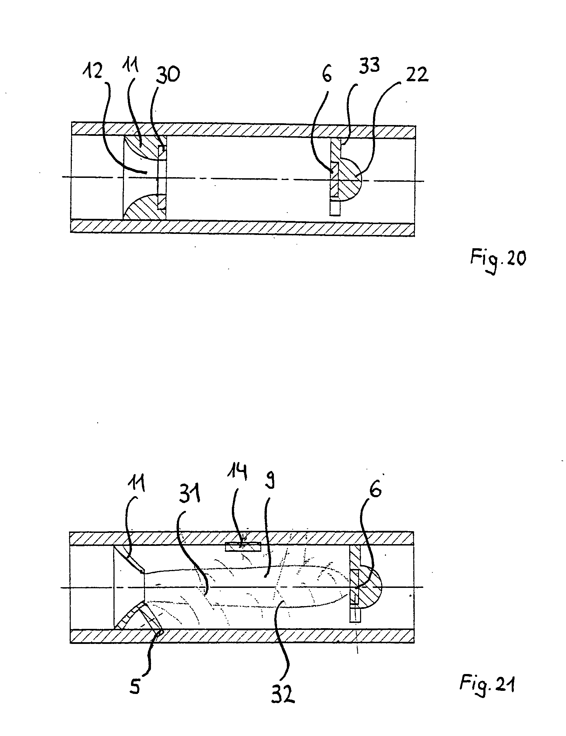

Bei der Anordnungsvariante gemäß Fig. 20 bildet die Düse 12 bzw. die Blende 11 mit dem Rindwandler 30 eine Einheit.

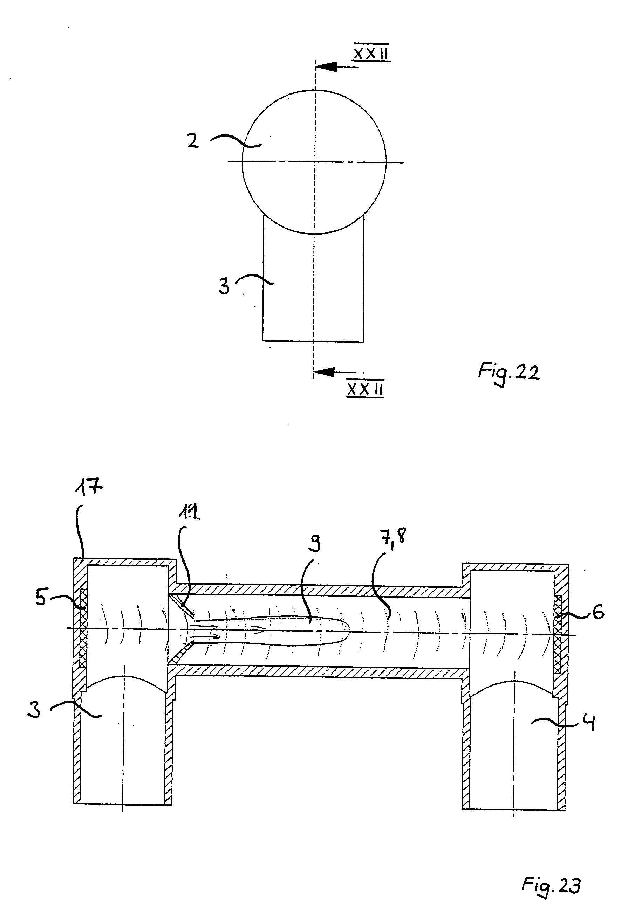

Fig. 21 zeigt eine Konstruktionsvariante, bei der unterschiedlich lange Meßstrecken 31, 32 vorgesehen sind. Die erste Meßstrecke 31 geht aus vom Ultraschallwandler 5 über den Reflektor 14 zum Ultraschallwandler 6. Die zweite Meßstrecke 32 verläuft direkt zwischen den beiden Ultraschallwandlern 5, 6. Mittels der beiden unterschiedlich langen Meßstrecken 31, 32 kann eine Information über die Form der Strömung bzw. die Art der Durchschallung erhalten werden. Durch die unterschiedlich langen Wege sind die Schallsignale zeitlich separierbar. Je nach Ausprägung der Strömung ist die Laufzeitdifferenz auf den beiden Meßstrekken 31, 32 unterschiedlich. Diese Information kann zur Korrektur der mittleren Laufzeitdifferenz benutzt werden, so daß Änderungen in der Strömungsgeometrie kompensiert werden können.

Die Fig. 22 und 23 zeigen schließlich den Aufbau mit einer schalldurchlässigen Blende 11. Diese hat den Vorteil, daß die Ultraschallsignale 7 sich ungehindert ausbreiten können und keine divergierenden Schallsignale erzeugt werden. Die Ultraschallwandler 5, 6 sind jeweils in die Wandung 17 der Meßkammer 2 integriert.

**Patentansprüche**

1.  Durchflußmesser für flüssige oder gasförmige Medien mit einer zumindest teilweise durchströmten Meßkammer (2), mindestens einem Einlaß- (3) und mindestens einem Auslaßkanal (4) und mit mindestens einem Ultraschallwandler (5, 6) zur Erzeugung und/oder zum Empfang von Ultraschallsignalen (7).
    **dadurch gekennzeichnet, daß**
    in der Meßkammer (2) mindestens ein Mittel zur Erzeugung mindestens eines Strahls (9) des zu messenden Mediums vorgesehen ist und die Ultraschallsignale (7) den mindestens einen Strahl (9) zumindest teilweise durchsetzen.

2.  Durchflußmesser nach Anspruch 1,
    **dadurch gekennzeichnet, daß**
    an das Mittel zur Strahlerzeugung ein Freiraum (15) angrenzt, in den das Medium als Strahl (9) eintritt.

3. Durchflußmesser nach einem der Ansprüche 1 oder 2,
      **dadurch gekennzeichnet, daß**
   das Medium bei einer Strömung unterhalb der kritischen Reynold'schen Zahl $Re_{krit}$ in den Freiraum (15) als Strahl (9) eintritt.

4. Durchflußmesser nach einem der vorhergehenden Ansprüche,
      **dadurch gekennzeichnet, daß**
   das Mittel zur Erzeugung eines Strahls (9) als Blende (11) mit mindestens einer Öffnung, insbesondere in Form einer Düse (12), ausgebildet ist.

5. Durchflußmesser nach einem der vorhergehenden Ansprüche,
      **dadurch gekennzeichnet, daß**
   mindestens ein Ultraschallwandler (5, 6) vorgesehen ist, mit dem schallwellenabhängige Meßsignale zur Schallaufzeitermittlung erzeugbar sind.

6. Durchflußmesser nach einem der vorhergehenden Ansprüche,
      **dadurch gekennzeichnet, daß**
   mindestens ein Drucksensor vorgesehen ist, mit dem schallwellenabhängige Meßsignale zur Schallaufzeitermittlung erzeugbar sind.

7. Durchflußmesser nach einem der vorhergehenden Ansprüche,
      **dadurch gekennzeichnet, daß**
   das Mittel zur Strahlerzeugung mindestens zwei Öffnungen aufweist, die so ausgerichtet sind, daß die damit erzeugten Teilstrahlen (19) des Mediums in die Meßstrecke (8) eintreten und/oder sich in der Meßstrecke (8) bündeln.

8. Durchflußmesser nach einem der vorhergehenden Ansprüche,
      **dadurch gekennzeichnet, daß**
   die Meßstrecke (8) am Mittelpunkt (20) des Mittels zur Strahlerzeugung beginnt bzw. endet und/oder diesen durchsetzt.

9. Durchflußmesser nach einem der vorhergehenden Ansprüche,
      **dadurch gekennzeichnet, daß**
   im Mittelpunkt (20) des Mittels zur Strahlerzeugung mindestens ein Ultraschallwandler (5, 6) und/oder mindestens ein Drucksensor und/oder mindestens ein Reflektor (14) angeordnet sind/ist.

10. Durchflußmesser nach einem der vorhergehenden Ansprüche,
      **dadurch gekennzeichnet, daß**
   auf der Außenseite der Wandung (17) der Meßkammer (2) zumindest im Bereich des Freiraums (15) ein wärmeisolierendes und/oder schalldämpfendes Material (21) vorgesehen ist.

11. Durchflußmesser nach einem der vorhergehenden Ansprüche,
      **dadurch gekennzeichnet, daß**
   an den endseitigen Bereichen der Meßstrecke (8), insbesondere am Ultraschallwandler (5, 6) und/oder am Drucksensor und/oder am Reflektor (14), ein Strömungskörper (22) vorgesehen ist.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

EP 1 235 057 A2

Fig. 15

Fig. 16

Fig. 17

Fig. 18

Fig. 19

Fig. 20

Fig. 21

Fig. 22

Fig. 23